# EUROPEAN PATENT SPECIFICATION

(11) **EP 0 364 826 B1**
(45) Date of publication and mention of the grant of the patent: **23.03.1994**
(21) Application number: 89118510.0
(22) Date of filing: 05.10.1989
(51) Int. Cl.: E05B 47/00, H02K 7/06

(54) **Actuator, particularly for locking and unlocking motor vehicle doors**
Betätigungsgerät, insbesondere zum Ver- und Entriegeln einer Motorfahrzeugstür
Actionneur, en particulier pour verrouiller et déverrouiller les portes d'un véhicule à moteur

(30) Priority: 10.10.1988 IT 2224788
(43) Date of publication of application: 25.04.1990
(73) Proprietor: MES S.A., CH-6855 Stabio (CH)
(72) Inventor: Canni Ferrari, Cesare Mario,, I-20060 Cassina de Pecchi (IT)
(74) Representative: Modiano, Guido, Dr.-Ing.

(56) References cited:
- EP-A- 0 188 106
- EP-A- 0 195 548
- US-A- 3 521 095
- US-A- 3 575 621

## Description

The present invention relates to an actuator particularly for locking and unlocking motor vehicle doors.

Actuators of this kind are well known. Such actuators allow the doors of motor vehicles to be locked and unlocked in a centralized manner by virtue of the intervention of an electronic control unit which is fitted with a timer which stops the rotation of a direct-current actuation motor, after a preset time.

The motor, excited by a pulse of preset duration and polarity, moves a rack rod along its axis in a certain direction by means of a gear transmission; said rack rod is associated with the lock either directly or by means of lever systems. A polarity reversal allows to reverse the direction of the movement.

The gear transmission must give a considerable reduction and this causes some negative consequences, namely:
- considerable stresses on the gears when the motor stops, due to the fact that the gears of the transmission cannot be blocked instantaneously and this entails considerable wear with possible breakages after a short period of operation;
- a certain "stiffness", i.e. a significant resistance to direct manual actuation of the bolt.

The above described disadvantages have been overcome only partially by the actuators described in the Italian patent No. 1,157,106 and in the Italian industrial utility model No. 193,997.

Said patent relates to an actuator which has an electric motor with an air gap oversized two to four times with respect to the air gap of the motors which are normally used for this purpose. The consequent torque reduction is substantially compensated by a corresponding reduction of the number of rotor slots and by a slight increase in the number of turns of said rotor winding. The terminals of the motor are connected to the control unit by means of an electric circuit breaker which is advantageously constituted by a controlled diode (triac) which disconnects said terminals when no power supply is present and opens the rotor circuit to eliminate the armature feedback due to the dynamo effect.

The Italian industrial utility model No. 193,997 discloses an actuator which comprises a mechanical one-way circuit breaker with positive engagement elements constituted by locking elements controlled by a radial actuation hub which is rigidly associated with the shaft of the motor and is adapted to wedge said locking elements between the driving part of the circuit breaker and the driven part thereof to rigidly rotationally associate said parts.

The two above described kinds of actuators still have a certain "stiffness" upon manual actuation. During manual actuation they furthermore produce a rather unpleasant noise which is due to the rotation of the gears of the transmission.

The applicant of the present invention is also one of the two applicants of the Italian industrial utility model application No. 23303 B/85. Said application discloses an actuator which comprises a gearwheel which cooperates, by virtue of the interposition of a cam element, with a rack rod which is associated with the kinematic locking and unlocking device of a door, and an electric motor for actuating a gearmotor. Said gearwheel has a toothless sector which is adapted to arrange itself, after locking and unlocking have occurred, at the gear of the gearmotor. A spring is provided on said gearwheel for the constant engagement of said gearwheel with the first tooth provided on each side of said toothless sector.

The actuator, according to the present invention, is completely free from the disadvantages of such actuators of the known art because when the motor is idle the rack rod is disengaged from the transmission device and the engagement occurs only during the actuation of the motor.

Document EP-A-0,195,548 describes an electrically-operable actuator for use in locking and unlocking a latch mechanism in a motor vehicle by the selective operation of a switchable direct current electric supply. This document which has been used to define the preamble of Claim 1 describes a clutch element for disengaging the transmission mechanism from the rack rod which comprises a spring-biased radially-extending tooth, located on a first gearwheel actuated by an electric motor, which engages with a tooth-like projection on a second gearwheel, which actuates the rack rod. When the transmission mechanism needs to be disengaged from the rack rod, the radially-extending tooth overrides the tooth-like projection exerting no force on the second gearwheel. The first gearwheel is stopped by means of two rubber balls, located within the gearwheel itself, which engage with a protrusion located on the housing of the actuator.

However, this solution, although effective, is fragile in structure, susceptible to wear and is rather difficult to assemble and maintain.

The applicant has aimed at providing an actuator with rack rod disengaged when the motor is idle which is substantially simpler, easier to manufacture, less expensive and more reliable than the known actuators described above.

This aim is achieved in an actuator according to the preamble of Claim 1, by the features of the characterising portion of that claim.

The actuator thus provided brilliantly and very simply eliminates the initially mentioned disadvantages of known actuators and simultaneously provides an actuator with rack rod disengaged when the motor is idle which is extremely simple, scarcely expensive, reliable and long-lasting.

Since the first gearwheel of the engagement assembly has a stop tooth which has a greater radial protrusion than the other teeth and is adapted to engage the corresponding set of teeth of the adjacent element of said transmission immediately after the rack rod has reached one of its two stroke limits, thus entailing the disengagement of said two gearwheels of the engagement assembly; the first gearwheel is blocked instantly after the two gearwheels of the engagement assembly have disengaged. This avoids the unpleasant mechanical noises described before. The first gearwheel is furthermore stopped in a precise angular position, already set for motion reversal. Excessive stresses are furthermore avoided on the elements of the transmission and on the motor itself.

In order to further reduce the stresses on the various elements of the transmission, said transmission may comprise a known flexible coupling.

The invention will become more readily understood from the following description of an embodiment thereof, given merely by way of example. In said description, reference is made to the accompanying drawing, wherein:
figure 1 is an isometric view of the actuator according to the invention, the cover of the casing being shown separated from the rest of the actuator to illustrate its internal mechanism;
figure 2 is a vertical axial sectional view thereof;
figure 3 is a view of the lower face of the first gearwheel of the engagement assembly; and
figure 4 is a view of the upper face of the second gearwheel of the engagement assembly.

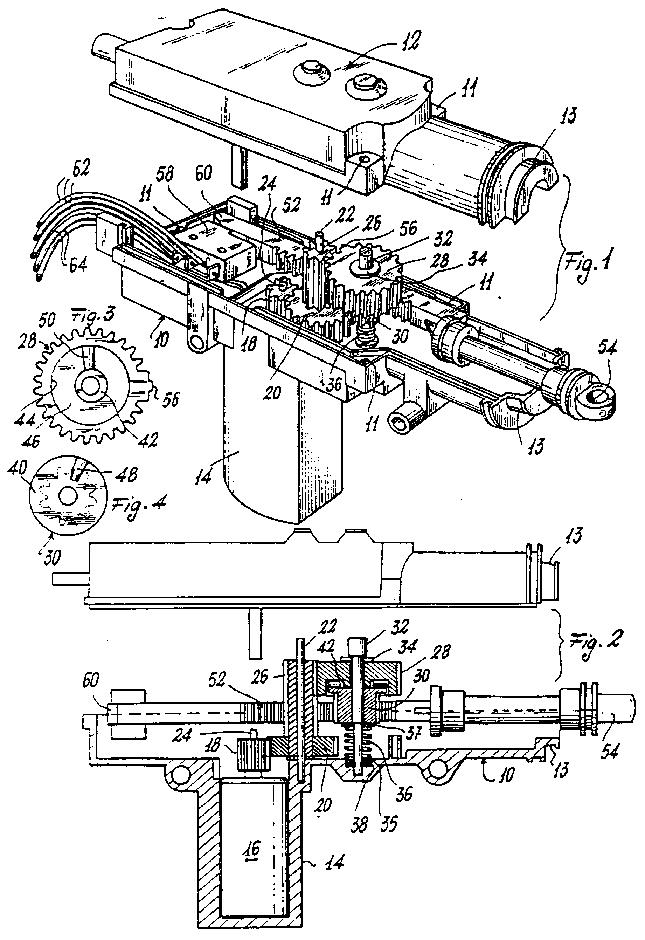

Figures 1 and 2 show that the actuator is composed of a casing which is constituted by a lower part 10 and by an upper part or cover 12. The two parts 10, 12 are coupled by means of screws or rivets inserted in adapted holes 11 and by means of a metallic split washer inserted in the circular groove 13. The lower part 10 of said casing has an approximately cylindrical portion 14 which extends downwards, and a direct-current electric motor 16, schematically illustrated in figure 2, is accommodated therein. The shaft 24 of said motor 16 is vertical, and a pinion 18 is keyed thereon; said pinion 18 meshes with a gearwheel 20 which is in turn keyed on a shaft 22 which is parallel to the shaft 24 of the motor. The pair constituted by the pinion 18 and by the gearwheel 20 performs a first reduction of the number of rotations of the motor 16. A pinion 26 is also keyed on said shaft 22 and engages a first gearwheel 28 of the engagement assembly, so that a further reduction of the rotations of the motor 16 is obtained.

The first gearwheel 28, which is freely rotatable with respect to a related shaft 32 which is parallel to the shafts 22 and 24, has a relatively large number of teeth with respect to an underlying gearwheel 30 (the second gearwheel of the engagement assembly) which is supported on said shaft 32 and can rotate freely with respect thereto. The shaft 32 and the shaft 22 are supported at their ends in appropriate seats provided respectively in the lower part 10 of the actuator casing and in the upper part 12 thereof. The first gearwheel 28 and the second gearwheel 30 can move axially with respect to the shaft 32. A washer 34 which rests against a shoulder of the shaft 32 allows to define the upper position (indeed the permanent position) of the gearwheel 28 on the shaft 32. The ends of a pre-loaded helical return spring 36 which is inserted on the shaft 32 rest on respective washers; the lower washer 35 is kept in place by a safety ring 38, while the upper washer 37 rests on a shoulder of the shaft 32, preventing the descent of the second gearwheel 30 but keeping it in contact with the first gearwheel 28 without the two gearwheels being however pressed against one another. As shown in figures 2 and 4, the second gearwheel 30 is provided with a flange 40 at its upper face. An annular coaxial protrusion 42, which acts as spacer, is provided on the lower face of the first gearwheel 28. Said first gearwheel 28 is downwardly provided with a recess 44 in which the flange 40 of the second gearwheel 30 is accommodated. Said second gearwheel is furthermore provided with a tooth 48 which extends radially and protrudes axially from its flange 40. A ridge 50 extends radially and protrudes axially from the bottom 46 of the recess 44 provided in the first gearwheel 28. The axial extension of the tooth 48 and of the ridge 50 respectively is naturally smaller than the distance between the bottom 46 of the first gearwheel 28 and the flange 40 of the second gearwheel 30. Said extension must however be such that when the motor is excited and the first gearwheel 28 is thus rotated, its ridge engages the tooth 48 of the second gearwheel 30, causing the latter to rotate. The ridge 50 and the tooth 48 are slightly tapered in the direction of their protrusion to facilitate their mutual surmounting.

The second gearwheel 30 permanently engages the set of teeth of a rack rod 52 which can therefore be moved in two directions according to the direction of rotation of the motor 16. An eyelet 54 is provided at one end of the rack rod 52 and allows to connect it to the known lever systems of the lock. Figure 1 also illustrates a microswitch 58 which is actuated by the end 60 of the rack rod 52; said microswitch is used to reverse the direction of rotation of the motor 16 and is connected to the electronic control unit (not illustrated) by means of the wires 62. The motor 16 is powered by means of the wires 64.

The transmission of the rotary motion of the motor 16 to the engagement assembly can naturally occur in a different manner from the one illustrated in the figures. For example, the pinion 18 might be arranged so as to directly engage the first gearwheel 28 of the engagement assembly. In this case the dimensions of the pinion 18 and of the gearwheel 28 must obviously be such as to obtain the required reduction of the number of rotations of the motor 16.

As mentioned initially, the first gearwheel 28 tends to continue its rotation even when the motor 16 has stopped operating, because of the great transmission reduction required, whereas in order to avoid the previously described disadvantages it must stop instantaneously and in a precise angular position. The actuator according to the invention comprises a suitable device for this purpose. It consists in the first gearwheel 28 being provided with a stop tooth 56 which protrudes radially more than the other teeth of the gearwheel and makes contact with the teeth of the pinion 26 immediately after the rack rod 52 has reached one of its two stroke limits. This allows to instantly block the first gearwheel 28.

In order to further reduce wear it is also possible to provide a known flexible coupling which is arranged, for example, coaxially to the gearwheel 20.

The operation of the actuator according to the present invention should be obvious to the man of the art. In any case the operation of the engagement assembly is briefly described.

The excitation of the motor 16 makes the first gearwheel 28 to rotate and the first gearwheel rotates said second gearwheel 30 by means of its ridge 50 which engages the tooth 48 of the second gearwheel 30 which in turn moves the rack rod 52. When said rack rod reaches its related stroke limit (according to the direction of rotation of the motor), in which it is blocked, the second gearwheel 30 is also blocked, so that the ridge 50 of the first gearwheel 28 surmounts the tooth 48 of the second gearwheel 30 and pushes it downwards against the resistance opposed by the spring 36. In this manner the rack rod 52 is disengaged from the rest of the transmission (except for the second toothed wheel 30 of the engagement assembly), so that its manual actuation in practice meets no resistance.

The gearwheel 28 continues its rotation until the stop tooth 56 engages the corresponding teeth of the pinion 26 and blocks itself instantly.

The above description of the operation of the engagement assembly is obviously valid for both motor rotation directions.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Actuator, particularly for locking and unlocking doors of motor vehicles, comprising an electronic control unit fitted with a timer adapted to stop the rotation of a direct-current motor (16), after a preset time, to move a rack rod (52) in two directions along its axis, said rack rod (52) being associated with an actuation rod (54), the reversal of the movement occurring as a consequence of a polarity reversal across the motor (16), a mechanical transmission (18, 20, 26, 28, 30) acting as reducer of the number of rotations of the motor (16) and transmitting the movement of the motor (16) to the rack rod (52), said transmission comprising an engagement assembly (28, 30) having a first gearwheel (28) to which the rotary movement of the motor shaft (24) is transmitted, a second gearwheel (30) which engages said rack rod (52), said second gearwheel (30) of said engagement assembly being coaxial to said first gearwheel (28), an actuation device which acts in both directions of rotation to rotate the second gearwheel (30) with the first gearwheel (28) until said rack rod (52) reaches one of its two stroke limits, said actuation ceasing when said stroke limit is reached, **characterized in that** said actuation device comprises a tapered protrusion (48) which is provided on the flange (40) of said second gearwheel (30) which is directed towards said first gearwheel (28), said protrusion (48) extending radially and protruding axially and being adapted to engage a tapered protrusion (50) which also extends radially and protruding axially and is provided on the lower face of said first gearwheel (28), said two gearwheels (28, 30) being normally kept at a minimal axial distance which allows the engagement of said two protrusions (48, 50), an elastic means (36) keeping said two gearwheels (28, 30) at said minimal axial distance without however preventing their axial disengagement induced by the overriding of the protrusions assigned to the increased spacing of said two gearwheels (28, 30) when the rack rod (52) reaches one of its two stroke limits, **further characterized** in that said first gearwheel (28) is provided with a stop tooth (56) which has a greater radial protrusion than the other teeth and is adapted to engage the corresponding set of teeth of the adjacent element of said mechanical transmission after said rack rod (52) has reached one of its two stroke limits, and **further characterized** in that said first gearwheel (28) is stopped by said stop tooth (56) at an angular position set for motion reversal.

2. Actuator according to claim 1, characterized in that it comprises a microswitch (58) for reversing the direction of rotation of said motor (16).

3. Actuator according to claims 1 and 2, characterized in that said microswitch (58) is actuated by an end (60) of said rack rod (52).

## Patentansprüche

1. Betätigungsvorrichtung, insbesondere zum Ver- und Entriegeln von Motorfahrzeugtüren, enthaltend eine elektronische Steuereinheit, die mit einem Zeitschalter versehen ist, durch den die Drehung eines Gleichstrommotors (16) nach einer vorgegebenen Zeit gestoppt werden kann, um eine Zahnstange (52) in zwei Richtungen entlang ihrer Achse zu verschieben, wobei die Zahnstange (52) mit einer Betätigungsstange (54) verbunden ist, wobei die Umkehr der Bewegung als Folge einer Umkehr der Polarität über den Motor (16) erfolgt, ein mechanisches Getriebe (18, 20, 26, 28, 30), um die Anzahl der Drehungen des Motors (16) zu reduzieren und die Bewegung des Motors (16) auf die Zahnstange (52) zu übertragen, wobei das Getriebe eine Einrückanordnung (28, 30) aufweist, enthaltend ein erstes Zahnrad (28), auf das die Drehbewegung der Motorwelle (24) übertragen wird, ein zweites Zahnrad (30), das in Eingriff mit der Zahnstange (52) steht, wobei das zweite Zahnrad (30) der Einrückanordnung koaxial zum ersten Zahnrad (28) angeordnet ist, eine Betätigungseinrichtung, die in beide Drehrichtungen wirkt, um das zweite Zahnrad (30) mit dem ersten Zahnrad (28) so lange zu drehen, bis die Zahnstange (52) eine ihrer Hubbegrenzungen erreicht, wobei die Betätigung abbricht, wenn die Hubbegrenzung erreicht wird, gekennzeichnet durch die Betätigungseinrichtung enthaltend einen abgeschrägten Vorsprung (48), der auf dem Flansch (40) des zweiten Zahnrades (30) vorgesehen ist, der zum ersten Zahnrad (28) ausgerichtet ist, wobei der sich radial ausdehnende Vorsprung (48) sich axial erstreckt und zum Eingriff mit einem abgeschrägten Vorsprung (50) ausgebildet ist, der sich ebenfalls radial ausdehnt und sich axial erstreckt und auf der Unterseite des ersten Zahnrades (28) vorgesehen ist, wobei die beiden Zahnräder (28, 30) normalerweise mit minimalem axialen Abstand voneinander gehalten werden, wodurch der Eingriff der beiden Vorsprünge (48, 50) ermöglicht wird, ein elastisches Mittel (36), um die beiden Zahnräder (28, 30) mit dem minmalen axialen Abstand voneinander zu halten, ohne jedoch ihre axiale Ausrückung zu verhindern, die durch ein Übersteigen der Vorsprünge bewirkt wird, und durch den erhöhten Abstand der beiden Zahnräder (28, 30) festgelegt ist, wenn die Zahnstange (52) eine ihrer Hubbegrenzungen erreicht, und weiterhin dadurch gekennzeichnet, daß das erste Zahnrad (28) mit einem Stoppzahn (56) versehen ist, der eine größere radiale Erstreckung als die anderen Zähne aufweist, um in die entsprechende Anzahl von Zähnen auf dem benachbarten Element des mechanischen Getriebes einzugreifen, nachdem die Zahnstange (52) eine ihrer beiden Hubbegrenzungen erreicht hat und ferner dadurch gekennzeichnet, daß das zweite Zahnrad (28) durch den Stoppzahn (56) in einer Winkelstellung, die für die Umkehr der Bewegung bestimmt ist, angehalten wird.

2. Betätigungsvorrichtung nach Anspruch 1, dadurch gekennzeichnet, daß sie einen Mikroschalter (58) für die Umkehr der Drehrichtung des Motors (16) enthält.

3. Betätigungsvorrichtung nach einem der Ansprüche 1 und 2, dadurch gekennzeichnet, daß der Mikroschalter (58) durch ein Ende (60) der Zahnstange (52) betätigbar ist.

## Revendications

1. Actionneur, en particulier pour verrouiller et déverrouiller des portes de véhicules à moteur, comprenant une unité de commande électronique équipée d'une minuterie conçue pour stopper la rotation d'un moteur à courant continu (16), au bout d'une durée préréglée, afin de déplacer une tige de crémaillère (52) dans deux directions le long de son axe, ladite tige de crémaillère (52) étant associée à une tige d'actionnement (54), l'inversion du déplacement ayant lieu en conséquence d'une inversion de la polarité du moteur (16), une transmission mécanique (18, 20, 26, 28, 30) servant à réduire le nombre de rotations du moteur (16) et transmettant le mouvement du moteur (16) à la tige de crémaillère (52), ladite transmission comprenant un ensemble d'engagement (28, 30) possédant une première roue dentée (28), à laquelle est transmise le mouvement rotatif de l'arbre (24) du moteur, et une seconde roue dentée (30) en prise avec ladite tige de crémaillère (52), ladite seconde roue dentée (30) dudit ensemble d'engagement étant coaxiale de ladite première roue dentée (28), et un dispositif d'actionnement agissant dans les deux directions de rotation pour faire tourner la seconde roue dentée (30) avec la première roue dentée (28) jusqu'à ce que ladite tige de crémaillère (52) atteigne une de ses deux limites de course, ledit actionnement cessant lorsque ladite limite de course est atteinte, **caractérisé** en ce que ledit dispositif d'actionnement comprend une protubérance conique (48), prévue sur la joue (40) de ladite seconde roue dentée (30) qui est dirigée vers ladite première roue dentée (28), ladite protubérance (48) s'étendant radialement en étant axialement protubérante et étant conçue pour engager une protubérance conique (50), qui s'étend également radialement en étant axialement protubérante et est prévue sur la face inférieure de ladite première roue dentée (28), lesdites deux roues dentées (28, 30) étant normalement maintenues à une distance axiale minimale qui permet l'engagement desdites deux protubérances (48, 50), et un moyen élastique (36) maintenant lesdites deux roues dentées (28, 30) à ladite distance axiale minimale, sans toutefois empêcher leur désengagement axial obtenu en outrepassant les protubérances par suite de l'espacement accru desdites deux roues dentées (28, 30) lorsque la tige de crémaillère (52) atteint l'une de ses deux limites de course, **caractérisé en outre** en ce que ladite première roue dentée (28) est dotée d'une dent d'arrêt (56) qui fait radialement saillie plus loin que les autres dents et est conçue pour engager la denture correspondante de l'élément voisin de ladite transmission mécanique une fois que ladite tige de crémaillère (52) a atteint l'une de ses deux limites de course, et **caractérisé en outre** en ce que ladite première roue dentée (28) est stoppée par ladite dent d'arrêt (56) à une position angulaire réglée pour l'inversion du mouvement.

2. Actionneur selon la revendication 1, **caractérisé** en ce qu'il comprend un commutateur miniature (58) pour inverser la direction de rotation dudit moteur (16).

3. Actionneur selon les revendications 1 et 2, **caractérisé** en ce que ledit commutateur miniature (58) est actionné par une extrémité (60) de ladite tige de crémaillère (52).
